# EUROPÄISCHE PATENTSCHRIFT

(11) **EP 0 754 636 B1**
(45) Veröffentlichungstag und Bekanntmachung des Hinweises auf die Patenterteilung: **22.03.2000**
(21) Anmeldenummer: 96110536.8
(22) Anmeldetag: 28.06.1996
(51) Int. Cl.: B65G 69/18

(54) **Automatisches Transfersystem**
Automatic transfer system
Système de transfert automatique

(30) Priorität: 20.07.1995 DE 19526510
(43) Veröffentlichungstag der Anmeldung: 22.01.1997
(73) Patentinhaber: Hermann Waldner GmbH & Co., 88231 Wangen im Allgäu (DE)
(72) Erfinder: Müller, Bruno, 88279 Amtzell (DE)
(74) Vertreter: Eder, Eugen, Dipl.-Ing.

(56) Entgegenhaltungen:
- EP-A- 0 033 972
- EP-A- 0 685 415

## Beschreibung

Die Erfindung bezieht sich auf ein automatisches Transfersystem zum Befüllen bzw. Entleeren mindestens eines beweglichen Behälters mit einem Produkt nach dem Oberbegriff des Anspruchs 1.

Ein derartiges Transfersystem kann eingesetzt werden, um beispielsweise in der chemischen oder pharmazeutischen Industrie Gefahrenstoffe oder pharmokologisch hochwirksame Produkte betriebssicher von einem System A in ein System B und umgekehrt zu transferieren.

Unter System A ist hierbei beispielsweise ein Mischer, Trockner, Bunker, eine Mühle, ein Granulator, eine Zentrifuge, ein Filter oder ein Faß zu verstehen; unter System B z.B. ein Faß, ein Container, ein Sack, Reaktor, Mischer, Trockner oder eine Tablettenpresse.

Bei dem Entleeren oder Füllen von beweglichen Behältern (System A), insbesondere mit pulverförmigen Stoffen, ist es in zunehmendem Maße wichtig, daß dieser Transfervorgang absolut staubfrei abläuft. Die Bedienperson wird hierdurch vorteilhafterweise vor Gefahrenstoffen geschützt, ohne daß eine persönliche Schutzausrüstung mit Atemschutz erforderlich ist.

Darüberhinaus muß, insbesondere bei pharmazeutischen Produkten, das Produkt selbst vor einer Kontamination durch Partikel aus der Umgebungsluft geschützt werden, wie dies gemäß technischer Schutzvorschriften (z.B. GMP/FDA) gefordert wird.

Als Stand der Technik ist bereits eine ventilähnliche Vorrichtung zur Herstellung einer dichten Verbindung zwischen einem beweglichen Behälter und einem festangebrachten Behälter bekannt (EP 0 504 054 B1). Hier findet ein Verschieben eines Wagens über zwei Kolbenzylindereinheiten statt, um die entsprechenden Funktionen des Transfersystems durchführen zu können. Obwohl ein Doppeldeckelprinzip (α- und β-Deckel) eingesetzt wird, ergeben sich folgende Nachteile:

Der α- und β-Deckel sowie ein Andockflansch und ein Stutzen sind mit Bajonettverschlüssen versehen. Zum Andocken des beweglichen Behälters ist dessen Rotation um ca. 60° erforderlich, ebenfalls zum Heben der verbundenen α- und β-Deckel. Zur Durchführung dieser Bewegung sind sehr präzise Bajonettverschlüsse erforderlich, welche kostenaufwendig sind. Bei der Rotation des beweglichen Behälters ergibt sich zwangsläufig ein Verschleiß an den Dichtungen und eine Freisetzung von Partikeln, was insbesondere bei pharmazeutischen Anwendungen problematisch ist. Es kann demzufolge zu einer Kontamination des Produktes kommen. Weiterhin erfordert die Rotationsbewegung einen relativ hohen mechanischen Aufwand, insbesondere bei Behältern mit größeren Nennweiten.

Beim Transfer eines Produktes (beispielsweise Staub), gelangt dieses in den Bereich der Dichtungen, so daß deren Dichtwirkung beeinträchtigt wird und außerdem Produktpartikel in unerwünschter Weise hinter die Dichtungen bewegt werden können. Eine sichere Reinigung des Füllrohres und eine Entfernung aller Rückstände ist nur mit hohem technischen Aufwand möglich. Dies ist jedoch bei pharmazeutischen Anwendungen unbedingt erforderlich.

Weiterhin sind zur Relativbewegung des aus zwei Rohren bestehenden Füllrohres eine Vielzahl von Führungen einzusetzen, welche alle im Staubraum liegen und schlecht zu reinigen sind. Das bekannte System ist daher außerdem nicht für eine CIP-Reinigung geeignet.

Nachteiligerweise ist darüberhinaus, daß die Stellungsüberwachung der beweglichen Teile im Staubraum erfolgt. Entsprechend sind Schläuche bzw. Kabel im Staubraum erforderlich, um die Signale zur Steuerung zu leiten.

Die horizontale Translationsbewegung des innenliegenden Wagens erfolgt über zwei Kolbenzylindereinheiten, deren Kolbenstangen in den Staubraum ragen, mit Staub beaufschlagt werden können und an den Pneumatikzylindern Dichtungs- und Reinigungsprobleme verursachen.

Als Stand der Technik ist darüberhinaus ein sog. automatisches Übertragungsventil bekannt (Literaturstelle ATV Manuell NR. 1080, 31. Mai 1994). Diese bekannte Konstruktion bedingt eine aufwendige Antriebstechnik für alle rotierenden Teile. Darüberhinaus sind eine Vielzahl von Wellendurchführungen mit Dichtungen erforderlich. Es ergibt sich eine große Bauhöhe, welche nachteilig beim Einsatz in bestehenden Anlagen ist.

Weiterer Stand der Technik ist ein Ventil (DE 92 12 623 U1), bei welchem ebenfalls das Doppeldeckel-Prinzip Anwendung findet. Analog den vorgenannten Ausführungsformen werden das Deckelhebesystem und das Füllrohr in horizontaler Ebene bewegt.

Nachteilig ist bei dieser bekannten Konstruktion, daß die Dichtflächen während des Produkttransfers ungeschützt sind, so daß sich das Produkt ablagern kann. Dadurch kann dieses nachteiligerweise freigesetzt werden.

Da aufblasbare Dichtungen Anwendung finden, sind diese nicht funktionssicher zu reinigen. Weiterhin ergibt sich eine große Baulänge, insbesondere bei größeren Nennweiten, da der Kolben der Kolbenzylindereinheit außen über Führungsstangen gelagert ist.

Darüberhinaus müssen alle Druckluft- und Signalleitungen über eine Hohlwelle in dem Kolben geführt werden, was kostenaufwendig ist.

Da viele Flanschverbindungen und Schrauben im Staubraum angeordnet sind, resultiert daraus eine erschwerte Reinigungsmöglichkeit und außerdem die Gefahr, daß sich ein Befestigungselement löst und in unerwünschter Weise in das Produkt gelangt.

Da die α- und β-Deckel nur durch Vakuum zusammengehalten werden, kann sich der Nachteil ergeben, daß bei Druckluftausfall der β-Deckel herunterfällt und der bewegliche Behälter nicht mehr einwandfrei verschlossen ist. Weiterhin sind die α- und /3-Dichtungen nicht funktionssicher gehaltert.

Zum Stand der Technik zählen weiterhin Vorrichtungen zur dosierten Austragung von Schüttgut aus einem Behälter (EP 0 459 475 A1, EP 0 547 861 A1, EP 0 380 255 B1). Hier handelt es sich zumeist um Systeme mit einer Entladestation und eine auf die Entladestation aufsetzbare transportable Station zum Halten und Befördern des Produktes. Eine translatorische Bewegung in horizontaler Ebene findet bei diesen bekannten Systemen nicht statt.

Demgegenüber liegt die Aufgabe der vorliegenden Erfindung darin, ein automatisches Transfersystem nach dem Oberbegriff des Anspruchs 1 zu schaffen, welches bei einfachem konstruktivem Aufbau einen einwandfreien Schutz des Produktes und der Bedienungsperson gewährleistet. Außerdem ist auf einfache Weise eine CIP-Reinigung möglich.

Diese Aufgabe wird mit den Merkmalen des kennzeichnenden Teil des Anspruchs 1 gelöst. Durch die zweiteilige Ausbildung des Gehäuses mit Gehäuseoberteil und mit Gehäuseunterteil sowie durch die Rotationsmöglichkeit des Gehäuseunterteils gegenüber dem Gehäuseoberteil und durch die dichte Wirkverbindung zwischen den entsprechenden Elementen wird neben einer einfachen Bearbeitungsmöglichkeit auch ein funktionssicherer Schutz des Produktes sowie der Bedienperson gewährleistet.

Die Erfindung wird nachfolgend anhand eines in der Zeichnung dargestellten Ausführungsbeispiels näher beschrieben. In der Zeichnung zeigen:
- Fig. 1: ein erfindungsgemäßes Transfersystem mit angedocktem beweglichen Behälter in schematischer Seitenansicht,
- Fig. 2: eine Draufsicht auf das System nach Anspruch 1,
- Fig. 3: einen Füllstutzen gemäß der vorliegenden Erfindung in Seitenansicht im Schnitt,
- Fig. 4: eine Seitenansicht des β-Deckels im Schnitt,
- Fig. 5: eine Seitenansicht des α-Deckels im Schnitt,
- Fig. 6: eine Dichtung zwischen Gehäuseoberteil und Unterteil in Seitenansicht im Schnitt, teils gebrochen,
- Fig. 7: eine Dichtung zwischen β-Deckel und Füllstutzen in Seitenansicht im Schnitt,
- Fig. 8 bis Fig. 21: einzelne Verfahrensschritte während der Funktion des erfindungsgemäßen Transfersystems in Seitenansicht im Schnitt in schematischer Darstellung.

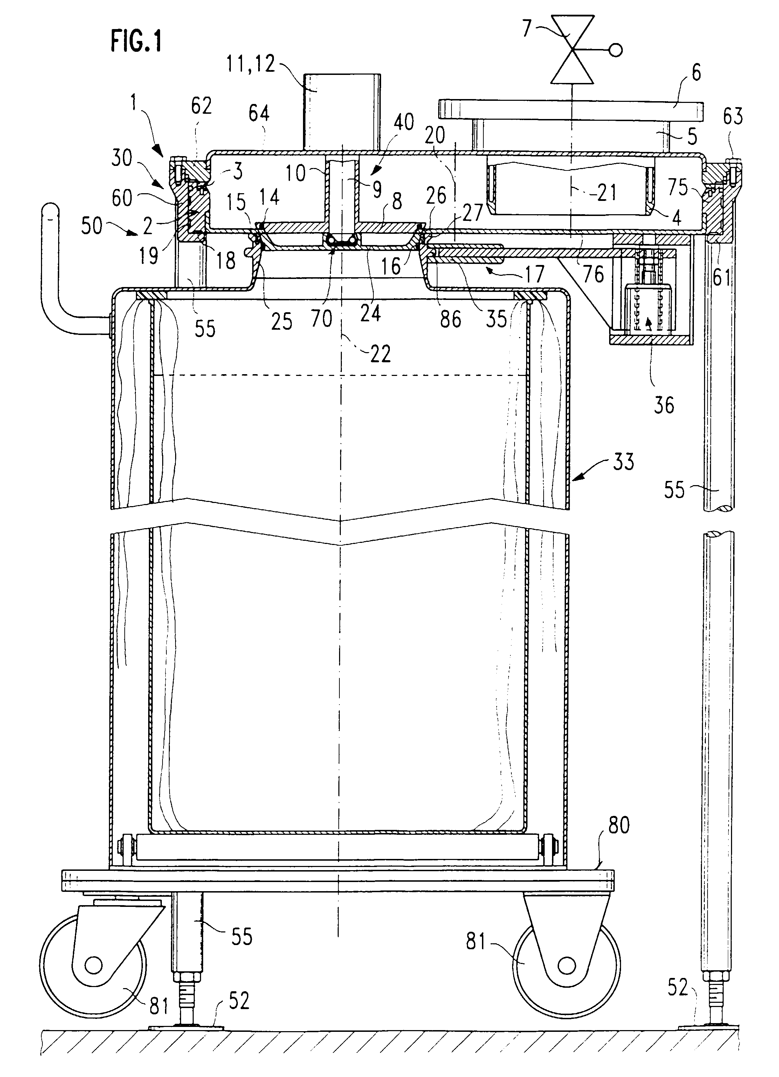

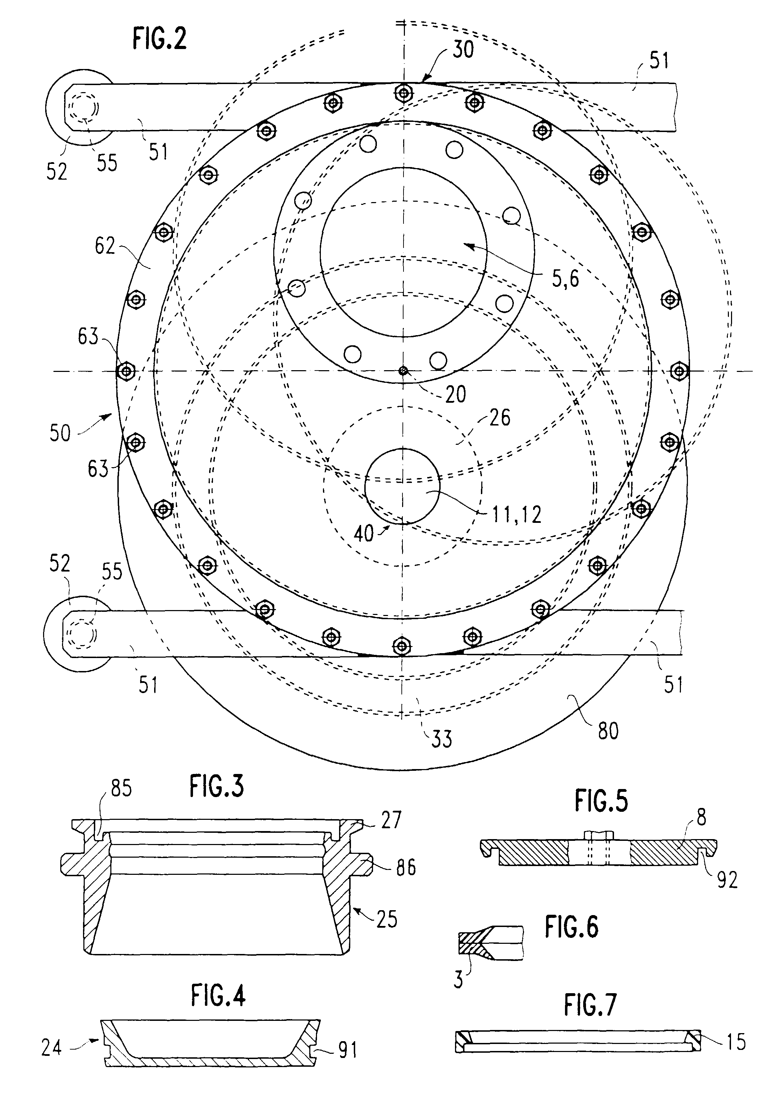

In Fig. 1 und 2 ist das erfindungsgemäße Transfersystem 50 zum Entleeren bzw. Befüllen eines beweglichen Behälters 33 näher dargestellt. Wie ersichtlich, weist dieses System 50 beispielsweise vier Standbeine 55 auf, welche nach Fig. 2 im oberen Teil in in horizontaler Ebene liegende Stützen 51 übergehen, an denen ein Gehäuse 30 des erfindungsgemäßen Systems 50 befestigt ist. Die Standbeine 55 weisen im unteren Bereich jeweils Stützplatten 52 auf, um eine stabile Positionierung des erfindungsgemäßen Transfersystems (50) zu gewährleisten.

Das mit den Stellplatten 52 verbundene Gehäuse 30 ist insbesondere nach Fig. 1 zweiteilig ausgebildet und besteht aus einem Gehäuseoberteil 1 sowie einen Gehäuseunterteil 2. Erfindungsgemäß ist hierbei das Gehäuseunterteil 2 relativ zum Gehäuseoberteil 1 um eine Rotationsachse 20 drehbar, wobei diese vertikale Rotationsachse 20 eine fiktive Drehachse darstellt.

Aus Fig. 1 geht hervor, daß das Gehäuseoberteil 1 mit einem Flanschteil 60 versehen ist, dessen unterer Flansch 61 einen Ring 75 des Gehäuseunterteils 2 untergreift, so daß dieses verschiebesicher und gegen unerwünschte Vertikalbewegung gesichert um die Rotationsachse 20 drehen kann.

Vorteilhafterweise ist hierbei das Flanschteil 60 L-förmig ausgebildet und im oberen Bereich mit einem Ring 62 über Schrauben 63 an der Stirnseite des Flanschteils 60 verschraubt. Der Ring 62 ist mit einer Platte 64 verschweißt, auf welcher ein Deckelhebesystem 40 sowie eine Hubvorrichtung 5 mit Anschlußflansch 6 angeordnet sind. Der Anschlußflansch 6 steht mit einem schematisch dargestellten Ventil 7 in Verbindung.

Unterhalb der Platte 64 befindet sich eine hohle Kolbenstange 10, welche im unteren Bereich mit einem sog. α-Deckel 8 verbunden ist. Im Inneren der hohlen Kolbenstange 10 ist als Stößel eine weitere Kolbenstange 9 gelagert. Diese Kolbenstange 9 durchsetzt ihrerseits den α-Deckel 8 und ist stirnseitig mit einem Eingriffselement 70 verbunden.

Ein sog. β-Deckel 24 verschließt über einen Füllstutzen 25 den Behälter 33.

Der α-Deckel 8 weist eine α-Dichtung 14 auf; der β-Deckel eine Dichtung 16. Der Füllstutzen 25 besitzt eine stirnseitige β-Dichtung 15 im Bereich eines Flanschrings 27 sowie einen Flansch 86.

Wie aus Fig. 1 ersichtlich, ist bei der dargestellten Position der Behälter 33 an dem Transfersystem 50 mit Hilfe eines Behälterzentrier- und Hubsystems 17 angedockt. Dieses System 17 weist u.a. Eingriffselemente 35 auf, welche in dem Flansch 86 des Füllstutzens 25 eingreifen und mit einem Antrieb 36 verbunden sind.

In einer nicht näher dargestellten Position läßt sich damit der auf einen Wagen 80 über Räder 81 verschiebbare bewegliche Behälter 33 unter das Transfersystem 50 so einschieben, daß der α-Deckel 8 und der β-Deckel 24 deckungsgleich in einer Auslaufachse 22 bzw. in einer Auslauföffnung 26 liegen. Nunmehr kann über den Antrieb 36 das Eingriffselement 35 den Flansch 86 des Füllstutzens 25 beaufschlagen, wonach sich der Antrieb 36 in vertikaler Richtung nach oben bewegt und damit die Position gemäß Fig. 1 eingenommen wird.

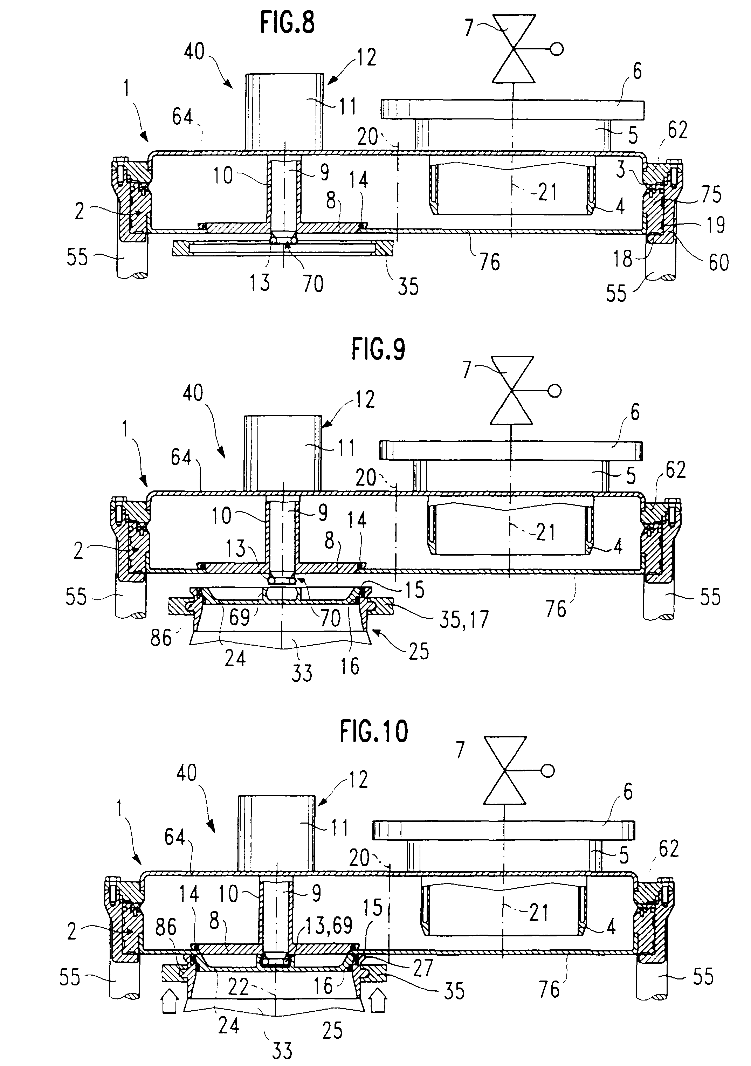

Der Funktionsablauf des erfindungsgemäßen Transfersystems 50 ist in den Fig. 8 bis 21 näher dargestellt: Nach Fig. 8 befindet sich das Transfersystem 50 in Ruhestellung. Der α-Deckel 8 ist abgesenkt; der Raum zwischen dem Gehäuseoberteil 1 und dem Gehäuseunterteil 2 ist gasdicht gegen die Umgebung abgeschlossen, und zwar aufgrund der Dichtwirkung der α-Dichtung 14, einer Dichtung 3 zwischen dem Ring 62 des Gehäuseoberteils 1 und der Stirnseite des Rings 75 des Gehäuseunterteils 2 und möglicher weiterer nicht näher dargestellter Dichtungen.

Das Füllrohr 4 ist in der Füllrohrachse 21 angehoben; die Eingriffselemente 35 des Hubsystems 17 sind abgesenkt.

Zwischen dem Ring 75 des Gehäuseunterteils 2, welcher unterseitig mit einer Platte 76 verschweißt ist und dem Flanschteil 60 des Gehäuseoberteils 1 befinden sich Radial- bzw. Axiallager 18 und 19, um eine einwandfreie Drehung des Gehäuseunterteils 2 gegenüber dem Gehäuseoberteil 1 um die Drehachse 20 zu bewirken.

Nach Fig. 9 wird ein beweglicher Behälter 33 mit Füllstutzen 25 am Zentrier- und Hubsystem 17 bzw. dessen Eingriffselemente 35 plaziert und - wie in Fig. 1 dargestellt - verriegelt. Der Füllstutzen 25 ist hierbei mit dem β-Deckel 24 gasdicht durch die β-Dichtung 15 und die Dichtung 16 verschlossen. Der β-Deckel 24 mit einem Einsatz 69 befindet sich im Abstand unterhalb des Eingriffselement 70 (z.B. Kugeln 13) des α-Deckels 8.

Nach Fig. 10 wird durch die Eingriffselemente 35 des Hubsystems 17 der Füllstutzen 25 an die Unterseite, d.h. die Platte 76, des Gehäuseunterteils 2 gedrückt und zwischen den beiden Teilen 25 und der Unterseite 76 des Gehäuseunterteils eine gasdichte Abdichtung durch die horizontale Dichtfläche der β-Dichtung 15 sowie durch den Flanschring 27 erzeugt. Die Unterseite des α-Deckels 8 und die Oberseite des β-Deckels 24 liegen hierbei exakt deckungsgleich in der Auslaufachse 22.

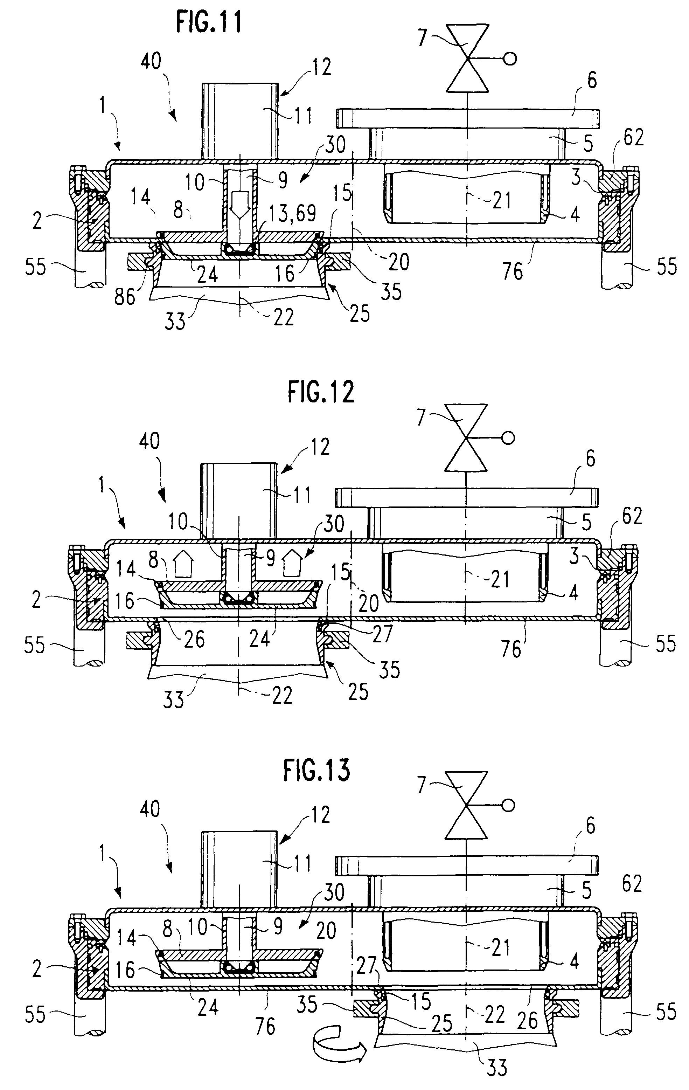

Gemäß Fig. 11 wird die Kolbenstange 9 mit Hilfe der Zylindereinheit 11, 12, abgesenkt, durchsetzt dabei die hohle Kolbenstange 10 und spreizt die Kugeln 13 im Bereich des Einsatzes 69; es ergibt sich dadurch eine mechanische Verriegelung der Kolbenstange 9 und entsprechend des α-Deckels 8 mit dem β-Deckel 24. Zusätzlich kann durch eine nicht näher dargestellte Bohrung in der Kolbenstange 9 oder in der hohlen Kolbenstange 10 zwischen dem α-Deckel 8 und dem β-Deckel 24 ein Vakuum erzeugt werden, um eine möglichst große Flächenpressung an den Dichtflächen zu erzielen.

Gemäß Fig. 12 wird nun die hohle Kolbenstange 10 gemeinsam mit der Kolbenstange 9 z.B. mit Hilfe des Zylinders 11 angehoben. Dadurch werden gleichzeitig die zusammengepreßten α- und β-Dekkel 8 bzw. 24 vertikal nach oben bewegt; sie geben nunmehr die Auslauföffnung 26 frei. Hierbei bleiben die vorgenannten Dichtflächen zwischen dem Füllstutzen 25 und der Platte 76 des Gehäuseunterteils 2 erhalten, d.h. der Innenraum des Gehäuses 30 bleibt gegenüber der Umgebung gasdicht verschlossen: Die β-Dichtung 15 im Bereich des Flansches 27 des Füllstutzens 25 beaufschlagt die Unterseite der Platte 76.

Nach Fig. 13 wird das Gehäuseunterteil 2 mit dem angedockten Füllstutzen 25 und dem beweglichen Behälter 33 um die Rotationsachse 20 des Gehäuses 30 gedreht, und zwar so lange, bis die Auslaufachse 22 koaxial zur Achse 21 des Füllrohrs 4 liegt.

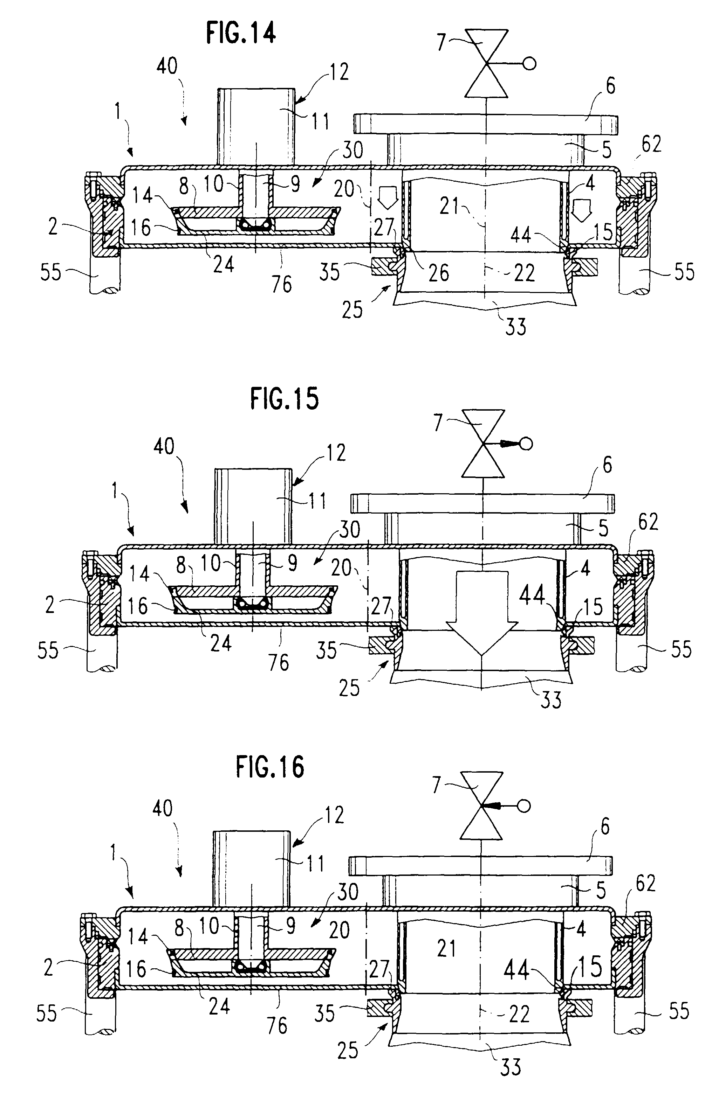

Nach Fig. 14 wird nunmehr das Füllrohr 4 durch die Hubvorrichtung 5 abgesenkt. Dabei dichtet der untere Bereich 44 des Füllrohres 4 in der Auslauföffnung 26 und an der β-Dichtung 15 des Füllstutzens 25 ab, um insbesondere bei einem Staubprodukt eine staubfreie Befüllung zu erreichen und um die Dichtflächen für die α- und β-Deckel 8 bzw. 24 vor einer unerwünschten Produktablagerung während der Befüllung wirksam zu schützen.

Nach Fig. 15 wird nunmehr das Ventil 7 geöffnet und der Produkttransfer kann stattfinden, d.h. das zu transportierende Produkt kann entweder in den beweglichen Behälter aus einem nicht näher dargstellten Behälter eingefüllt (sh. Pfeilrichtung) oder aus dem beweglichen Behälter 33 in diesen umgeladen werden.

Nach Fig. 16 ist der Produkttransfer beendet, das Ventil 7 wird geschlossen.

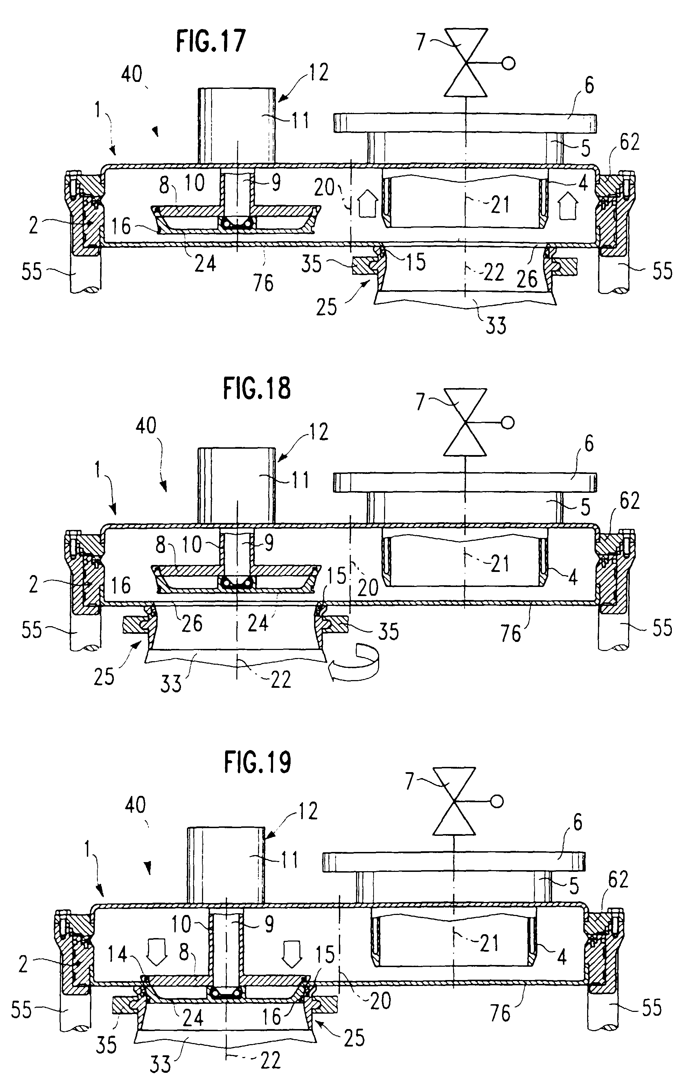

Gemäß Fig. 17 wird nunmehr das Füllrohr 4 mit Hilfe der Hubvorrichtung 5 wieder angehoben, wobei der Füllstutzen 25 weiterhin in seiner abgedichteten Position verbleibt. Nach Fig. 18 wird daraufhin das Gehäuseunterteil 2 mit dem angedockten Füllstutzen 25 um die Rotationsachse 20 so lange gedreht, bis die Auslaufachse 22 in der Achse des α-Deckels 8 liegt.

Gemäß Fig. 19 wird das Deckelhebesystem 40 abgesenkt, d.h. die Kolbenstange 9 mit der hohlen Kolbenstange 10 werden mit Hilfe der Zylindereinheiten 11 und 12 vertikal nach unten bewegt und die mechanische Verriegelung durch die Kugeln 13 wird gelöst.

Gleichzeitig wird das in Fig. 10 und 11 eventuell angelegte Vakuum zwischen dem α-Deckel 8 und dem β-Deckel 24 unterbrochen.

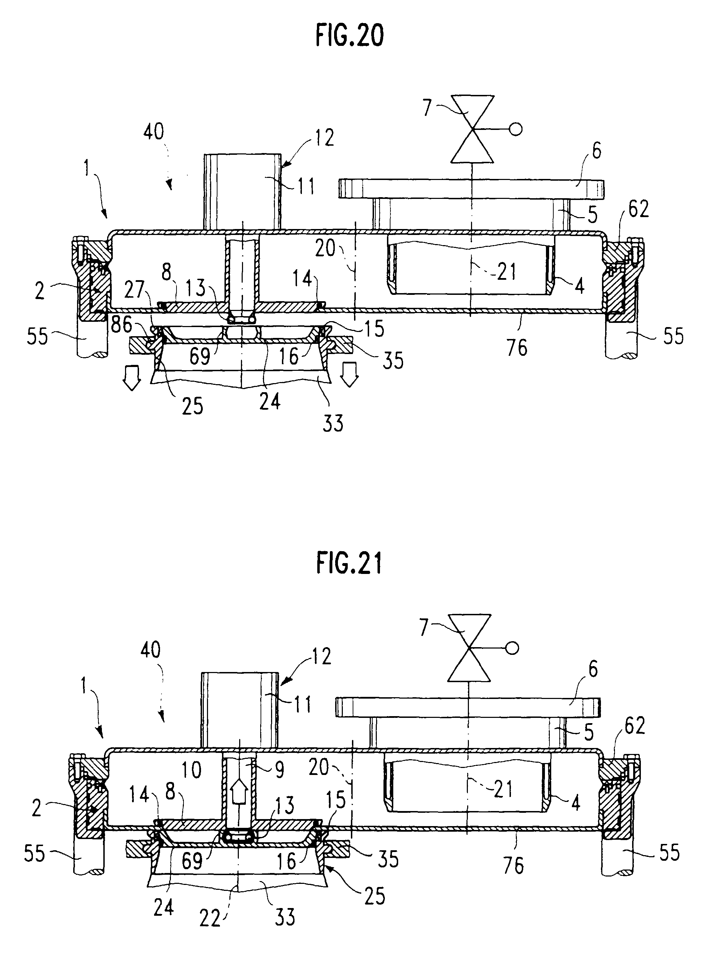

Nach Fig. 20 werden die Eingriffselemente 35 des Hubsystems 17 mit dem Füllstutzen 25 abgesenkt und die Anlage des Füllstutzens 25 an der Unterseite des Gehäuseunterteils 2, d.h. an der Platte 76 gelöst. Nunmehr kann der Füllstutzen 25 bzw. der Eingriffselemente 35 entriegelt und der abgefüllte bzw. gefüllte bewegliche Behälter 33 über den Wagen 80 und die Rollen 81 auf dem Boden abgestellt werden. Der Behälter 33 mit dem Wagen 80 und den Rollen 81 läßt sich nunmehr seitlich für weitere Bearbeitungsvorgänge bzw. Befüllungsvorgänge verschieben.

Fig. 21 zeigt eine Position analog nach Fig. 11, d.h. ein weiterer Behälter 33 ist über dem Füllstutzen 25 an der Platte 76 des Gehäuseunterteils 22 angedockt und steht zur weiteren Bearbeitung zur Verfügung.

Fig. 3 offenbart eine vergrößerte Darstellung des Füllstutzens 25. Wie ersichtlich, weist dieser im oberen Bereich einen Flansch 27 und eine umlaufende Nut 85 zur Aufnahme der β-Dichtung 15 auf. Weiterhin ist ein umlaufender Flansch 86 am Außenumfang des Füllstutzens 25 vorgesehen, um Eingriffsbereiche für die Eingriffselemente 35 des Zentrier- und Hubsystems 17 zu bilden.

Fig. 4 zeigt im vergrößerten Schnitt den β-Deckel 24, welcher schalenförmig ausgebildet ist und im unteren Bereich eine umlaufende Nut 91 besitzt, die zur Aufnahme der Dichtung 16 (z.B. O-Ring) dient.

Fig. 5 zeigt den α-Deckel 8 in Seitenansicht im Schnitt, der mit einer umlaufenden Nut 92 zur Aufnahme der α-Dichtung 14 (Fig. 1) versehen ist.

In Fig. 6 ist die Dichtung 3 dargestellt, wie sie zwischen dem Ring 62 des Gehäuseoberteils 1 und der Stirnseite des Rings 75 des Gehäuseunterteils 2 nach Fig. 1 angeordnet ist.

Fig. 7 zeigt im Schnitt die β-Dichtung 15, welche in die Nut 85 des Füllstutzens 25 nach Fig. 3 eingesetzt wird und ein Abdichten gegen die Platte 76 des Gehäuseunterteils 2 und gegen den β-Deckel 24 bewirkt.

Statt der Verrastung über Kugeln 13 mit Hilfe der Kolbenstange 9 besteht auch die nicht näher dargestellte Möglichkeit, andere an sich bekannte Verriegelungsvorrichtungen, beispielsweise Rastgesperre einzusetzen.

Da das gesamte Transfersystem so einfach aufgebaut ist, läßt sich ein CIP-Reinigung problemlos durchführen.

Insgesamt ergibt sich ein Transfersystem 50, welches bei einfachem Aufbau infolge des geschlossenen Gehäuses 30 mit gegenüber dem Oberteil 1 drehbaren Gehäuseunterteil 2 funktionssicheren Schutz des zu bearbeitenden Produktes und der betreffenden Bedienperson aufweist, so daß die Umgebungsluft vor Kontamination durch Partikel aus dem Behälter geschützt ist. Außerdem läuft der Transfervorgang bei der Entleerung und der Befüllung von Behältern absolut staubfrei ab.

## Patentansprüche

1. Automatisches Transfersytem (50) mit einem beweglichen Behälter (33) und einem Gehäuse (39) zum Befüllen bzw. Entleeren eines beweglichen Behälters (33) mit einem Produkt, wobei der Behälter (33) über eine dichte Verbindung mit einem Gehäuse (30) kuppelbar und das Gehäuse (30) mit einem Anschlußflansch (6) einer Auslaßöffnung (26) einem Füllrohr (4) sowie einer Hubvorrichtung (5) für das Füllrohr (4) versehen ist und mit einem, eine Vorrichtung zum Herstellen einer Wirkverbindung zwischen dem beweglichen Behälter (33) und dem Gehäuse (30) bilden den Behälterzentrier- und Hubsystem (17), wobei über das Deckelhebesystem (40) ein die Auslaßöffnung (26) verschließbarer α-Deckel (8) gemeinsam mit einem den beweglichen Behälter (33) verschließender β-Deckel (24) abhebbar ist und wobei die Auslaßöffnung (26) im Bereich einer Achse (21) des Füllrohrs (4) zu bringen ist und damit über die Hubvorrichtung (5) über das Füllrohr (4) eine dichte Fließverbindung zwischen dem Anschlußflansch (6) und der Auslaßöffnung (26) herstellbar ist,
**dadurch gekennzeichnet**,
daß das Gehäuse (30) zweiteilig ausgebildet ist mit einem Gehäuseoberteil (1) mit der Hubvorrichtung (5), dem Anschlußflansch (6) und mit einem Deckelhebesystem (40) sowie mit einem Gehäuseunterteil (2) mit der Auslaßöffnung (26) und dem Behälterzentrier- und Hubsystem (17),
daß das Gehäuseunterteil (2) relativ zum Gehäuseoberteil (1) um eine Rotationsachse (20) drehbar ist und
daß durch Drehung die Auslaßöffnung (26) des Gehäuseunterteils (2) im Bereich der Achse (21) des Füllrohrs (4) zu bringen ist.

2. System nach Anspruch 1,
**dadurch gekennzeichnet**,
daß die Deckelhebevorrichtung (40) eine Zylindereinheit (11, 12) aufweist, deren hohle Kolbenstange (10) mit dem α-Deckel (8) verbunden ist und daß die hohle Kolbenstange (10) von einer Kolbenstange (9) durchsetzt ist, über welche wahlweise der β-Deckel (24) am α-Deckel (8) mechanisch ver- oder entriegelbar ist.

3. System nach Anspruch 1,
**dadurch gekennzeichnet**,
daß am Gehäuseoberteil (1) in der Achse (21) das in seiner Länge veränderbare Füllrohr (4) angeordnet ist, welches in der Entleerstellung eine dichte Fließverbindung zwischen dem Gehäuseoberteil (1) und dem Gehäuseunterteil (2) herstellt.

4. System nach Anspruch 3,
**dadurch gekennzeichnet,**
daß das Füllrohr (4) aus Elastomer besteht.

5. System nach Anspruch 1,
**dadurch gekennzeichnet**,
daß der α-Deckel (8) und der β-Deckel (24) über Verriegelungen mit der Kolbenstange (9) mechanisch verriegelbar sind.

6. System nach Anspruch 5,
**dadurch gekennzeichnet**,
daß die mechanische Verriegelung durch Kugeln (13) herstellbar ist.

7. System nach Anspruch 1,
**dadurch gekennzeichnet**,
daß der α-Deckel (8) und der β-Deckel (24) insbesondere durch ein Vakuum zusammenpreßbar sind, welches insbesondere in einer Venturi-Düse pneumatisch erzeugbar ist, wobei die Absaugung durch eine Bohrung in einer der Kolbenstangen (9, 10) erfolgt.

8. System nach einem der vorhergehenden Ansprüche,
**dadurch gekennzeichnet**,
daß der α-Deckel (8) eine ringförmige α-Dichtung (14) aufweist, die mit einer konischen Dichtfläche die konische Auslauföffnung (26) gasdicht abdichtet und mit einer horizontalen, unterseitigen, ringförmigen Dichtfläche gasdicht am β-Deckel (24) anliegt, wobei der Durchmesser am verjüngten Ende identisch ist mit dem größten Durchmesser des β-Deckels (24), so daß die Oberseite des β-Deckels (24) komplett abgedeckt ist durch die α-Dichtung (14) und den α-Deckel (8).

9. System nach einem der vorhergehenden Ansprüche,
**gekennzeichnet durch**
einen Behälterfüllstutzen (25), welcher als rotationssymmetrisches Bauteil mit einem Flanschring (27) ausgebildet ist, an welchem der Füllstutzen (25) über mindestens eine Dichtung (15) zentriert und an das Gehäuseunterteil (2) andrückbar ist.

10. System nach Anspruch 1 bis 8,
**gekennzeichnet durch**
einen Behälterfüllstutzen (25), welcher als rotationssymmetrisches Bauteil mit einer Nut versehen ist, an der der Stutzen (25) zentriert und über mindestens eine Dichtung an das Gehäuseunterteil (2) andrückbar ist.

11. System nach einem der vorhergehenden Ansprüche,
**gekennzeichnet durch**
am Gehäuse (30) angeordnete Anschlußelemente für eine CIP-Reinigung.

12. System nach einem der vorhergehenden Ansprüche,
**dadurch gekennzeichnet**,
daß die Rotationsachse (20) vertikal verläuft.

13. System nach Anspruch 1 und 12,
**dadurch gekennzeichnet**,
daß das um die vertikale Rotationsachse (20) drehbare Gehäuseunterteil (2) in dem Gehäuseoberteil (1) gelagert ist.

14. System nach Anspruch 13,
**gekennzeichnet durch**
am Außenumfang des Gehäuseunterteils (2) angeordnete Radial- und Axiallager (18, 19) zur Abstützung am Gehäuseoberteil (1).

## Claims

1. An automatic transfer system (50) with a movable container (33) and a housing (39) for filling or emptying a movable container (33) with or of a product, the container (33) being able to be coupled to a housing (30) by means of a hermetic connection and the housing (30) being provided with a connection flange (6), an outlet opening (26), a filling tube (4) and a lifting device (5) for the filling tube (4) and with a container centring and lifting system (17) forming a device for producing an operative connection between the movable container (33) and the housing (30),
wherein an α-lid (8) which can close the outlet opening (26), together with a β-lid (24) which closes the movable container (33), can be lifted off via the lid lifting system (40) and wherein the outlet opening (26) can be brought into the region of an axis (21) of the filling tube (4) and thus by means of the lifting device (5) a hermetic flow connection between the connection flange (6) and the outlet opening (26) can be produced by means of the filling tube (4),
characterised in that
the housing (30) is in two parts with an upper housing section (1) with the lifting device (5), the connection flange (6) and with a lid lifting system (40) and also with a lower housing section (2) with the outlet opening (26) and the container centring and lifting system (17),
that the lower housing section (2) can rotate relative to the upper housing section (1) about an axis of rotation (20) and
that by rotation the outlet opening (26) of the lower housing section (2) can be brought into the region of the axis (21) of the filling tube (4).

2. A system according to Claim 1, characterised in that the lid lifting device (40) has a cylinder unit (11, 12), the hollow piston rod (10) of which is connected to the α-lid (8) and that the hollow piston rod (10) is penetrated by a piston rod (9) by means of which the β-lid (24) can alternatively be mechanically locked on or unlocked from the α-lid (8).

3. A system according to Claim 1, characterised in that the filling tube (4) which is of variable length is arranged on the upper housing section (1) in the axis (21), which tube in the emptying position forms a hermetic flow connection between the upper housing section (1) and the lower housing section (2).

4. A system according to Claim 3, characterised in that the filling tube (4) is made of elastomer.

5. A system according to Claim 1, characterised in that the α-lid (8) and the β-lid (24) can be locked mechanically to the piston rod (9) by locking means.

6. A system according to Claim 5, characterised in that the mechanical locking can be brought about by balls (13).

7. A system according to Claim 1, characterised in that the α-lid (8) and the p-lid (24) can be pressed together in particular by a vacuum which can be generated pneumatically in particular in a venturi nozzle, the extraction taking place via a bore in one of the piston rods (9, 10).

8. A system according to one of the preceding claims, characterised in that the α-lid (8) has an annular α-seal (14) which seals the conical outlet opening (26) in gastight manner with a conical sealing surface and lies in gastight manner against the β-lid (24) with a horizontal annular sealing surface on the underside, the diameter at the tapered end being identical to the maximum diameter of the β-lid (24), so that the upper side of the β-lid (24) is completely covered by the α-seal (14) and the α-lid (8).

9. A system according to one of the preceding claims, characterised by a container-filling connection piece (25) which is in the form of a rotationally symmetrical component with a flange ring (27) on which the filling connection piece (25) is centred by means of at least one seal (15) and can be pressed against the lower housing section (2).

10. A system according to Claims 1 to 8, characterised by a container-filling connection piece (25) which is in the form of a rotationally symmetrical component with a groove on which the connection piece (25) is centred and can be pressed against the lower housing section (2) by means of at least one seal.

11. A system according to one of the preceding claims, characterised by connection elements arranged on the housing (30) for CIP cleaning.

12. A system according to one of the preceding claims, characterised in that the axis of rotation (20) extends vertically.

13. A system according to Claims 1 and 12, characterised in that the lower housing section (2) which is rotatable about the vertical axis of rotation (20) is mounted in the upper housing section (1).

14. A system according to Claim 13, characterised by radial and axial bearings (18, 19) arranged on the outer periphery of the lower housing section (2) for supporting on the upper housing section (1).

## Revendications

1. Système de transfert automatique (50) comprenant un récipient mobile (33) et un boîtier (30) pour le remplissage d'un récipient mobile (33) avec un produit ou la vidange de ce récipient, le récipient (33) pouvant être couplé à un boîtier (30) par l'intermédiaire d'une liaison étanche, et le boîtier (30) étant pourvu d'une bride de raccordement (6), d'une ouverture de sortie (26), d'un tube de remplissage (4) et d'un dispositif de levage (5) du tube de remplissage (4), et comprenant un système (17) de centrage et de levage de récipient formant dispositif pour établir une liaison active entre le récipient mobile (33) et le boîtier (30), système dans lequel un couvercle - α(8), qui obture l'ouverture de sortie (26), peut être relevé, conjointement avec un couvercle -β(24), qui obture le récipient mobile (33), par l'intermédiaire du système de soulèvement de couvercle (40), et dans lequel l'ouverture de sortie (26) doit être amenée dans la zone d'un axe (21) du tube de remplissage (4) et, par ce fait, une liaison d'écoulement étanche peut être établie entre la bride de raccordement (6) et l'ouverture de sortie (26) par l'intermédiaire du dispositif de levage (5) et du tube de remplissage (4),
caractérisé en ce que
le boîtier (30) est formé de deux pièces comprenant une pièce supérieure de boîtier (1) qui comporte le dispositif de levage (5), la bride de raccordement (6) et un système de soulèvement de couvercle (40), ainsi qu'une pièce inférieure de boîtier (2) qui comporte l'ouverture de sortie (26) et le système (17) de centrage et de levage de récipient,
en ce que
la pièce inférieure de boîtier (2) peut être tournée autour d'un axe de rotation (20) par rapport à la pièce supérieure de boîtier (1) et
en ce que
l'ouverture de sortie (26) de la pièce inférieure de boîtier (2) peut être amenée par rotation dans la zone de l'axe (21) du tube de remplissage (4).

2. Système selon la revendication 1,
caractérisé en ce que
le système de soulèvement de couvercle (40) comporte un vérin (11,12) dont la tige de piston creuse (10) est reliée au couvercle -α(8), et
en ce que
la tige de piston creuse (10) est traversée par une tige de piston (9) par l'intermédiaire de laquelle le couvercle -β(24) peut être, au choix, verrouillé mécaniquement sur le couvercle -α(8) ou déverrouillé mécaniquement de celui-ci.

3. Système selon la revendication 1,
caractérisé en ce que
le tube de remplissage (4), de longueur modifiable, est disposé sur la pièce supérieure de boîtier (1) dans l'axe (21) et établit, dans la position de vidange, une liaison d'écoulement étanche entre la pièce supérieure de boîtier (1) et la pièce inférieure de boîtier (2).

4. Système selon la revendication 3,
caractérisé en ce que
le tube de remplissage (4) est fait en élastomère.

5. Système selon la revendication 1,
caractérisé en ce que
le couvercle -α(8) et le couvercle -β(24) peuvent être verrouillés mécaniquement avec la tige de piston (9) par l'intermédiaire de verrous.

6. Système selon la revendication 5,
caractérisé en ce que
le verrouillage mécanique peut être établi par des billes (13).

7. Système selon la revendication 1,
caractérisé en ce que
le couvercle -α(8) et le couvercle -β(24) peuvent être pressés l'un contre l'autre, notamment par le vide, qui peut être notamment établi pneumatiquement dans une buse de venturi, l'aspiration étant effectuée à travers un alésage ménagé dans une des tiges de piston (9,10).

8. Système selon l'une des revendications précédentes,
caractérisé en ce que
le couvercle -α(8) comporte une garniture -a(14) de forme annulaire qui rend étanche au gaz l'ouverture conique d'évacuation (26) par une surface d'étanchéité conique, et qui s'applique de façon étanche au gaz contre le couvercle -β(24) par une surface d'étanchéité annulaire disposée horizontalement et sur la face inférieure, le diamètre de la petite extrémité étant identique au plus grand diamètre du couvercle -β(24), de telle sorte que la face supérieure du couvercle -β(24) soit complètement recouverte par la garniture -α(14) et le couvercle-α(8).

9. Système selon l'une des revendications précédentes,
caractérisé par
un tuyau de remplissage de récipient (25) qui est formé en tant qu'élément de construction à symétrie de révolution comportant un anneau de bride (27) sur lequel, par l'intermédiaire d'au moins une garniture (15), le tuyau de remplissage (25) est centré et peut être pressé contre la pièce inférieure de boîtier (2).

10. Système selon la revendication 1 à 8,
caractérisé par
un tuyau de remplissage de récipient (25) qui est formé en tant qu'élément de construction à symétrie de révolution et est pourvu d'une gorge sur laquelle le tuyau (25) se centre et, par l'intermédiaire d'au moins une garniture, peut être pressé contre la pièce inférieure de boîtier (2).

11. Système selon l'une des revendications précédentes,
caractérisé par
des éléments de raccord pour un nettoyage selon la méthode CIP (cleaning in place-nettoyage sur place), disposés sur le boîtier (30).

12. Système selon l'une des revendications précédentes,
caractérisé en ce que
l'axe de révolution (20) s'étend verticalement.

13. Système selon les revendications 1 et 12,
caractérisé en ce que
la pièce inférieure de boîtier (2), pouvant être tournée autour de l'axe de révolution vertical (20), est montée sur paliers dans la pièce supérieure de boîtier (1).

14. Système selon la revendication 13,
caractérisé par
des paliers radiaux et axiaux (18,19) disposés sur la circonférence extérieure de la pièce inférieure de boîtier (2) pour l'appui sur la pièce supérieure de boîtier (1).
